# EUROPEAN PATENT APPLICATION

(11) **EP 1 708 449 A1**
(43) Date of publication of application: **04.10.2006**
(21) Application number: 05252076.4
(22) Date of filing: 01.04.2005
(51) Int. Cl.: H04L 29/06

(54) **Mobile VPN proxy method based on session initiation protocol**

(71) Applicant: Zyxel Communications Corporation, Hsin-Chu, Taiwan (TW)
(72) Inventor: Huang, Shun-Chao, Hsin-Chu (TW)
(74) Representative: Dearing-Lambert, Peter Richard

(57) **Abstract**

A mobile VPN proxy method is based on an SIP communication protocol, whereby a mobile node (MN) (11) roaming in a foreign network (20) has secure communication with a communication node (CN) (15) in a home network (10). A first SIP proxy server (51), an application level gateway (ALG) (52), a second SIP proxy server (16) and an AAA server (40) are provided between the home network (10) and the foreign network (20). The second SIP proxy server (16) modifies a message transmission direction of an SIP/SDP message packet of the CN (15) and sends the packet to the ALG (52), when the second SIP proxy server (16) detects the MN (11) intending to connect to the home network (10). The first SIP proxy server (51) performs identification/authentication for the MN (11) and generates a negotiation key to the ALG to establish a secure connection between the first SIP proxy server and the ALG (52). Moreover, the ALG (52) takes over the communication between the MN (11) and the CN (15).

## Description

### BACKGROUND OF THE INVENTION

### 1. Field of the Invention

The present invention relates to a mobile VPN proxy method based on an SIP (Session Initiation Protocol) communication protocol, and more particularly to a mobile VPN proxy method to solve the difficulties occurred in mobile VPN define by the Internet Engineering Task Force (IETF).

### 2. Description of the Prior Art

The virtual private network (VPN) is developed to provide a dedicated channel between a remote computer and a local server through a wide area network such as Internet. The VPN also provides measure to ensure the security of communication, just like the trusted home network (Intranet).

More particularly, VPN provides following measures to ensure security:

1. User identification: VPN has rigorous identification upon user and allow the log in for authenticated user only.

2. Address administration: VPN provides dedicated address for authenticated user with ensured security.

3. Data encryption: The data transmitted through Internet is encrypted to prevent from peeping by unauthenticated user.

4. Key administration: VPN generates and frequently updates the key between user computer and server.

5. Protocols compatibility: VPN supports popular Internet protocols such as IP, IPX, Point-to-Point Tunneling Protocol (PPTP), Layer2 Tunneling Protocol (L2TP) and IPSec etc.

Internet protocol (IP) is the most popular communication protocol for computer network. However, IP does not take security issue into account and therefore the IPSec (IP security) protocol is defined by Internet Engineering Task Force (IETF) in Request for Comments (RFC) 2401. The IPSec protocol is used to encrypt the IP data flow and prevent data from modifying and inspection by third party and prevent data from simulation, fetching and reproduction.

As the prevailing of wireless network, the mobile VPN for wireless network is important issue for user. In order to overcome these problems, the IETF Working Group (WG) has proposed a Mobile IPv4 (IETF RFC 3344) protocol, which uses a mechanism to support international seamless roaming (ISR) for VPN users.

The Mobile IPv4 protocol defines two home agents (HA), namely, i-HA for internal network and x-HA for external network. The i-HA manages the roaming of mobile node (MN) in internal network such as Intranet and the x-HA manages the roaming of MN in external network such as Internet. However, there are still problem to be solved in the Mobile IPv4 protocol.

For example, when an MN, such as a notebook computer with wireless communication equipment, roams in an Intranet, a mobile IP (MIP) is assigned to the MN by an i-HA. When the MN moves out of Intranet, i.e. roams in an external network such as Internet, (such as a user in remote branch office connecting to the business Intranet through Internet), the MN from the x-HA will register to the i-HA through the IPSec-based VPN gateway. Therefore, the VPN Gateway can establish IPSec channel for the x-HA.

The MN would get a new care-of address (CoA) from the roaming external network. Moreover, the MN requires the VPN gateway refreshing IPSec tunnel after MN's each movement into an external network. The x-HA encapsulates the established IPSec tunnel below the x-MIP tunnel, therefore, the established IPSec tunnel is not changed. The established IPSec tunnel is not destructed after the MN obtains a new CoA from the VPN gateway. In this way, the Mobile IPv4 protocol and the IPSec protocol are not changed and only the CoA necessary for the MN is changed.

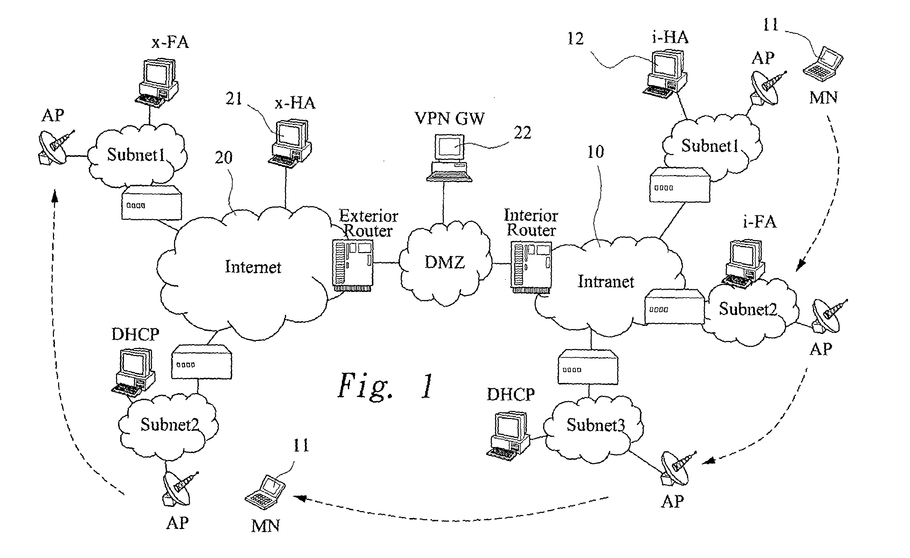

Fig. 1 is a schematic diagram of mobile VPN architecture defined by IETF. In this figure, an MN 11 roams in Intranet 10 through an i-HA 12. The MN 11 requires registering to an x-HA 21 for obtaining a new CoA when the MN moves from Intranet 10 to Internet 20. Afterward the x-HA 21 sends request to a VPN gateway 22 for establishing an IPSec tunnel between the x-HA 21 and the VPN gateway 22. The VPN gateway 22 then registers the VPN-TIA (VPN Tunnel Inner Address) of the MN11 to the i-HA 12 in order to connect the IPSec tunnel to the i-HA 12. Therefore, the VPN for the MN is established to facilitate the MN to roam both in Intranet 10 and Internet 20.

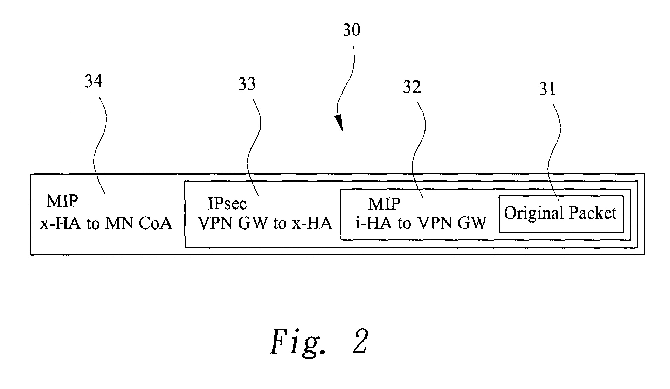

Fig. 2 shows the message format of the mobile VPN as the MN 11 moves from Intranet 10 to Internet 20. The message contains an original packet 31, an i-NUP tunnel message 32 encapsulating the original packet 31 and sent from the i-HA 12 to the VPN gateway 22, an IPSec tunnel massage 33 encapsulating the i-MIP tunnel message 32 and sent from the VPN gateway 22 to the x-HA 21, and an x-MIP tunnel massage 34 encapsulating the IPSec channel massage 33 and sent from the x-HA 21 to the CoA of the MN 11.

The IETF solution, however, leads to two questions: First, does the x-HA 21 have sufficient security and can we trust the x-HA? Second, where should we put the x-HA 21? An improper placement of the x-HA 21 will influence handoff latency and end-to-end latency. Even though the three layers of packer headers (i-MIP channel message 32, IPSec channel massage 33 and x-MIP channel massage 34) provide continuity for message packet transmission, security for external network transmission and reaching ability for internal network, however, the data payload of the application layer is shortened. Moreover, the three layers of packer headers also cause bandwidth overhead and the efficiency is degraded.

It is desirable to solve the problem of the mobile VPN defined by the IETF. Therefore, the present invention provides a mobile VPN proxy method based on SIP (Session Initiation Protocol) communication protocol. The repeated sending of the same message packet can be prevented and the message packet can be secured. The method of the present invention can be applied to the communication between an un-trusted foreign network and a secure home network.

### SUMMARY OF THE INVENTION

The present invention provides mobile VPN proxy method based on SIP communication protocol. The method exploits the SIP proxy server, the AAA server, security protocols and MIDCOM defined in the IETF protocol. More, particularly, the SIP proxy server provides convenient session setup and identification and authentication in the signature phase. The ALG receives command from the SIP proxy server and ensures security of data transmission under MIDCOM architecture. The unauthenticated data cannot enter the home network through the ALG server. The AAA server performs the identification and authentication step. Therefore, the wasted resource due to the three layers of packer headers can be saved.

Accordingly, the present invention provides a mobile VPN proxy method based on SIP communication protocol. The method is applied to a home network and at least one foreign network such that a mobile node (MN) roaming in the foreign network has secure communication with a communication node (CN) in the home network. The method comprises the steps of:

a) providing a first SIP proxy server and an application level gateway (ALG) at a path between the home network and the foreign network;

b) providing a second SIP proxy server in the home network;

c) the second SIP proxy server modifying a message transmission direction of an SIP/SDP (Session Description Protocol) message packet of the CN and sending the SIP/SDP message packet to the ALG, when the second SIP proxy server detecting that the MN roaming in the foreign network intends to connect to the home network;

d) the first SIP proxy server performing identification and authentication for the MN and generating a negotiation key to the ALG in order to establish a secure connection between the first SIP proxy server and the ALG; and

e) the ALG taking over the communication between the MN and the CN.

Moreover, in the above step b), the second SIP proxy server provides secure function for message packet sent from the MN and sends the message packet to the ALG.

Moreover, in the above step d), the first SIP proxy server performs the identification and authentication to generate the negotiation key through an Authentication, Authorization and Accounting (AAA) server.

Moreover, the method of the present invention further comprises steps after the step d):

the first SIP proxy server commanding the ALG to reserve a sufficient resource for taking over the transmitting data; and

the ALG intervening an SIP message flow by responding a necessary result.

### BRIEF DESCRIPTION OF THE DRAWINGS

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:

**Fig. 1** is a schematic diagram of mobile VPN architecture defined by IETF.

**Fig. 2** shows the message format of the mobile VPN for the MN.

**Fig. 3** shows a schematic diagram of the SIP-based mobile VPN architecture according to the present invention.

**Fig. 4** shows a flowchart of the method according to the present invention.

### DETAILED DESCRIPTION OF THE INVENTION

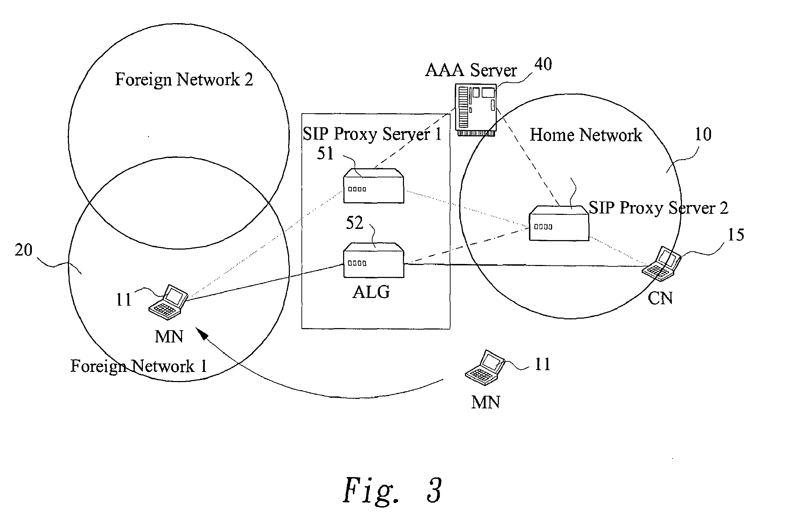

**Fig. 3** shows a schematic diagram of the SIP-based mobile VPN architecture according to the present invention. The SIP-based mobile VPN architecture comprises a home network **10,** at least one foreign network **20,** an application level gateway (ALG) **52,** a first SIP proxy server **51,** a second SIP proxy sever **16** and an Authentication, Authorization and Accounting (AAA) server **40.**

The home network **10** comprises at least one corresponding node **15,** which is a user in the home network **10.** The foreign network **20** comprises at least one MN **11,** which is an outside user roaming into the foreign network **20** and intends to connect to the CN **15.** In this example, the CN **15** and the MN **11** are computers with wireless network equipment.

The ALG **52** is placed at a message transmission path between the home network **10** and the foreign network **20.** The AAA **40** is placed between the first SIP proxy server **51** and the second SIP proxy sever **16.** The first SIP proxy server **51** and the ALG **52** are placed at an edge of the home network **10.**

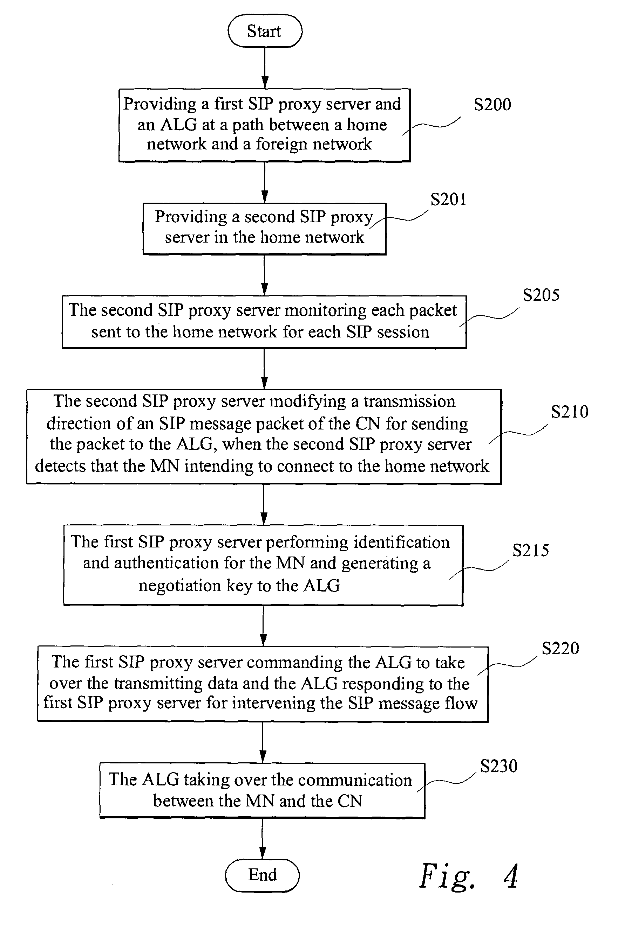

**Fig. 4** shows a flowchart of the method according to the present invention, wherein an SIP communication protocol is exploited to provide mobile VPN proxy method between the home network **10** and the foreign network **20.** Therefore, the MN **11** has secure data transmission with the CN **15** in the home network **10** even though the MN **11** is roaming in the foreign network **20.** According to this method, the first SIP proxy server **51** and the ALG **52** are provided at a message transmission path between the home network **10** and the foreign network **20** in step **S200.** Afterward, the second SIP proxy sever **16** is provided in the in the home network **10** in step **S201.**

The present invention includes three phases:

(1) Signaling phase: The propagation of message packet is session managed by SIP architecture.

(2) Key exchange phase: The MN 11 and the VPN have key exchange therebetween to protect the message packet **30** during transmission.

(3) Transport phase: The encrypted message of the CN **15** is processed by the ALG **52.**

In above-mentioned three phases, the second SIP proxy sever **16** provides security function to the message packet sent from the CN **15** and sends the message packet to the ALG **52.** At the same time, the second SIP proxy sever 16 and the first SIP proxy server **51** co-work to satisfy security requirement of the message packet sent from the MN **11** in the foreign network **20.**

In the signaling phase, the second SIP proxy sever **16** will monitor each packet entering the home network **10** for each SIP session in step **S205.** When the second SIP proxy sever **16** detects that an MN **11** roaming in the foreign network **20** intends to connect to the home network **10,** the second SIP proxy sever **16** assigns sufficient resource in the ALG **52** and modifies the message transmission direction of SIP/SDP (Session Description Protocol) message packet of the CN **15.** Therefore, the message packet is sent to the ALG **52** in step **S210.**

Moreover, if the MN **11** located in the foreign network **20** intends to roam to another foreign network **20,** the first SIP proxy server **51** will send he SIP message packet completely and orderly to the CN **15.** Therefore, the connection between the ALG **52** and the CN **15** can be sustained.

In the key exchange phase, key manage protocol and key exchange are defined by secure transmission protocol. The IKE (Internet Key Exchange Protocol) is a preferable choice when the secure transmission protocol adopts IPSec. In this case, the ALG **52** is preferably used for key exchange of the MN **11.**

In the first step for the key exchange, the first SIP proxy server **51** performs identification and authentication for the MN **11.** The first SIP proxy server **51** requires an AAA server **40** for the identification and authentication step. The SIP architecture generally uses RADIUS (Remote Access Dial-up User Service) server and DIAMETER server as the AAA sever **40.**

After the authentication step, the AAA sever **40** will produce a negotiation key. Alternatively, a private key is used as negotiation key. The negotiation key is then used by key management protocol and exchanged into session key. Finally, the negotiation key or the session key is sent to the ALG **52** through the first SIP proxy server **51** in step **S215.**

In the transport phase, the interaction between the first SIP proxy server **51** and the ALG **52** is important and is compliant with the MIDCOM protocol. The first SIP proxy server **51** acts as MIDCOM proxy and the ALG **52** acts as client.

The first SIP proxy server **51** requests the ALG **52** to reserve sufficient resource for taking over the transmitting data. The ALG **52** will provide required result to the first SIP proxy server **51** to intervene the SIP message flow in step **S220.** In other word, the first SIP proxy server **51** will provide negotiation key, session keys or other related security factors to establish security connection for the ALG **52.**

After above three phases are finished, the transmission between the MN **11** and the CN **15** is performed by the ALG **52** in step **S230.** In the foreign network **20,** the ALG **52** and the MN **11** have transmission under the security protocol.

The present invention adopts SIP proxy server, the AAA server, security protocols and MIDCOM defined in the IETF protocol. The SIP proxy server is used for convenient session setup and identification and authentication in the signature phase. The ALG receives command from the SIP proxy server and ensures security of data transmission under MIDCOM architecture. The unauthenticated data cannot enter the home network through the ALG server.

In the present invention, the ALG server uses only one layer of secure communication protocol, which is different to the conventional mobile IP using three layers of tunnels. Therefore the unnecessary packet header can be omitted and the end-to-end latency and bandwidth waste can be prevented.

To sum up, the present invention discloses a mobile VPN proxy method based on SIP communication protocol. The repeated sending of the same message packet can be prevented and the message packet can be secured. The method of the present invention can be applied to the communication between an un-trusted foreign network and a secure home network.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A mobile VPN proxy method based on SIP communication protocol, the method applied to a home network (10) and at least one foreign network (20) such that a mobile node (MN) (11) roaming in the foreign network (20) has secure communication with a communication node (CN) (15) in the home network (10), the method comprising the steps of:
a) providing a first SIP proxy server (51) and an application level gateway (ALG) (52) at a path between the home network (10) and the foreign network (20);
b) providing a second SIP proxy server (16) in the home network (10);
c) the second SIP proxy server (16) modifying a message transmission direction of an SIP/SDP message packet of the CN (15) and sending the SIP/SDP message packet to the ALG (52), when the second SIP proxy server detecting that the MN (11) roaming in the foreign network (20) intends to connect to the home network (10);
d) the first SIP proxy server (51) performing identification and authentication for the MN (11) and generating a negotiation key to the ALG (52) in order to establish a secure connection between the first SIP proxy server (51) and the ALG (52); and
e) the ALG (52) taking over the communication between the MN (11) and the CN (15).

2. The method as in claim 1, wherein in the step b) the second SIP proxy server (16) provides secure function for message packet sent from the CN (15) and sends the message packet to the ALG (52).

3. The method as in claim 1, wherein before the step c), the second SIP proxy server (16) monitors each packet for each SIP session.

4. The method as in claim 1, wherein after the step d), the first SIP proxy server (51) will response the SIP message packet completely and orderly to the CN (15) when the MN (11) located in the foreign network (20) intends to roam to another foreign network, whereby a connection between he ALG (52) and the CN (15) is sustained.

5. The method as in claim 1, wherein in the step d), the first SIP proxy server (51) performs the identification and authentication to generate the negotiation key through an Authentication, Authorization and Accounting (AAA) server (40).

6. The method as in claim 5, wherein the AAA server (40) is placed between the first SIP proxy server (51) and the second SIP proxy server (16).

7. The method as in claim 1, further comprising steps after the step d):
the first SIP proxy server (51) commanding the ALG (52) to reserve a sufficient resource for taking over the transmitting data; and
the ALG (52) intervening an SIP message flow by responding a necessary result.

8. The method as in claim 1, wherein the MN (11) and the CN (15) are computers with wireless network equipment.

9. The method as in claim 1, wherein in the step a) the first SIP proxy server (51) and the ALG (52) are provided at edge of the home network (10).
